# FASCICULE DE BREVET EUROPEEN

(11) **EP 1 059 111 B1**
(45) Date de publication et mention de la délivrance du brevet: **24.01.2007**
(21) Numéro de dépôt: 00401450.2
(22) Date de dépôt: 24.05.2000
(51) Int. Cl.: B01D 53/14, B01D 53/52, C01B 17/05

(54) **Procédé et dispositif de traitement d'un gaz contenant de l'hydrogène sulfuré, avec recyclage de la solution catalytique reduite**
Verfahren und Vorrichtung zur Behandlung eines Gases welches Schwefelwasserstoff enthält, mit Rückführung der reduzierten katalytischen Lösung
Process and apparatus for treatment of a gas containing hydrogen sulfide with recycling of the reduced catalytic solution

(30) Priorité: 10.06.1999 FR 9907359
(43) Date de publication de la demande: 13.12.2000
(73) Titulaire: Institut Français du Pétrole, 92852 Rueil-Malmaison Cedex (FR)
(72) Inventeur: Barrere-Tricca, Cécile, 75011 Paris (FR); Huard, Thierry, 92120 Montrouge (FR); Streicher, Christian, 92500 Rueil-Malmaison (FR)

(56) Documents cités:
- WO-A-92/17401
- DE-A- 3 444 252
- US-A- 4 532 118
- US-A- 4 859 436
- US-A- 5 753 189

## Description

La présente invention concerne un procédé amélioré de désulfuration d'une charge gazeuse contenant de l'hydrogène sulfuré afin d'éliminer plus facilement le soufre élémentaire contenu dans une solution catalytique de désulfuration et formé par réaction chimique d'oxydo-réduction après une étape de mise en contact. Pour cela, une partie au moins de la solution catalytique issue de l'étape de mise en contact et contenant du soufre élémentaire est recyclée vers l'étape d'absorption dans des conditions choisies pour augmenter la taille moyenne des grains de soufre et notamment pour diminuer le nombre des grains de soufre de très faible taille

Le procédé selon l'invention s'applique notamment dans un procédé de type "Redox" de désulfuration d'un gaz contenant au moins de l'hydrogène sulfuré, où la charge gazeuse est mise en contact avec une solution catalytique. La solution catalytique comprend par exemple un métal polyvalent chélaté par au moins un agent chélaté dans des conditions appropriées pour réaliser l'oxydation de l'hydrogène sulfuré en soufre élémentaire et la réduction simultanée du métal polyvalent chélaté d'un degré d'oxydation supérieur à un degré d'oxydation inférieur. A l'issue de l'étape d'absorption, on récupère d'une part un effluent gazeux quasiment exempt d'hydrogène sulfuré et d'autre part la solution catalytique au moins partiellement réduite et chargée en soufre élémentaire se présentant sous la forme d'un solide en suspension. Une partie au moins de la solution catalytique est recyclée par exemple vers l'étape d'absorption de manière à augmenter la taille des particules de soufre. La partie non recyclée de la solution catalytique contenant le soufre est débarrassée de la majorité du soufre présent en suspension au cours d'une étape de séparation, puis envoyée ensuite à une étape de régénération par exemple à l'air, avant d'être utilisée à l'étape d'absorption.

L'art antérieur décrit de nombreux procédés rédox et des dispositifs associés permettant d'éliminer l'hydrogène sulfuré et de récupérer le soufre élémentaire formé au cours du procédé.

Le procédé de désulfuration comporte par exemple les deux étapes d'oxydoréduction suivantes :
* dans une première étape,(étape d'absorption, réaction d'oxydo-réduction), l'hydrogène sulfuré présent dans le gaz à traiter réagit avec des ions ferriques chélatés selon la réaction

   H₂S + 2 Fe³⁺ (chél) ---> S + 2H⁺ + 2Fe²⁺ (chél) (1)

Le soufre issu de cette réaction chimique, se présente sous la forme de grains de très faible taille. On désigne dans toute la suite de la description, ce soufre, par l'expression « soufre natif ».
* dans une deuxième étape ( étape de régénération), les ions ferreux sont réoxydés par l'oxygène de l'air suivant la réaction :

   2Fe²⁺ (chél) + 2H⁺ + 1/2 O₂ ---> 2 Fe³⁺ (chél) + H₂O (2)
Ces étapes sont notamment décrites dans les brevets US 5 753 189, US 4 859 436 et US 4 532 118, et dans les demandes de brevet WO 92/17401, DE 34 44252, mais aucun de ces documents ne décrit ou ne suggère le recyclage d'une partie de la solution catalytique au moins en partie réduite et contenant du soufre élémentaire dans l'absorbeur pour diminuer la quantité de soufre natif (de petite taille) dans la solution catalytique devant être purifiée et régénérée. Le brevet US-A-5 753 189 décrit en effet le recyclage d'une partie de la solution catalytique réduite débarrassée du soufre pour contrôler la concentration en soufre dans la zone d'absorption.

Les solutions catalytiques aqueuses utilisées sont en règle générale de très mauvais solvant du soufre. En conséquence, la présence de grains de soufre natif de très faible taille peut gêner le fonctionnement de ces procédés.

Les dispositifs comportent en général des équipements de séparation du soufre par des procédés mécaniques tels que la filtration, la décantation ou la centrifugation. Les grains de soufre très faibles tailles peuvent perturber cette séparation, par exemple en générant des colmatages fréquents des filtres.

Par ailleurs, lorsque le gaz à désulfurer est à haute pression, le procédé comporte en général une étape de détente préalable de la solution catalytique contenant le soufre avant de la régénérer à l'air. Cette détente provoque un dégazage de la solution qui est à l'origine de problèmes de moussage qui peut être amplifié du fait des grains de soufre de très faibles tailles.

D'autre part, lorsque l'étape de régénération de la solution catalytique au moins partiellement réduite est réalisée par mise en contact avec de l'air à pression atmosphérique, et où le soufre, est, le plus souvent, récupéré par flottation et/ou décantation, la présence de grains de soufre de très faible taille peut diminuer l'efficacité de cette récupération.

L'objet de l'invention est de proposer une approche nouvelle qui consiste à diminuer le nombre des grains de soufre de très faible taille au moins en sortie de l'étape d'absorption et pallier notamment aux inconvénients précités de l'art antérieur. Pour obtenir ce résultat, on utilise au moins une partie de la solution catalytique au moins partiellement réduite et qui contient du soufre élémentaire et on la recycle à l'étape d'absorption.

L'invention concerne un procédé amélioré de désulfuration d'une charge gazeuse contenant de l'hydrogène sulfuré comportant au moins les étapes suivantes :
a) on met en contact la charge gazeuse avec une solution catalytique comportant au moins un métal polyvalent chélaté par au moins un agent chélatant, dans des conditions appropriées pour effectuer l'oxydation de l'hydrogène sulfuré en soufre élémentaire et la réduction concomitante du métal polyvalent d'un degré d'oxydation supérieure à un degré d'oxydation inférieur, dans une étape d'absorption,
b) on récupère d'une part un effluent gazeux sensiblement débarrassé en hydrogène sulfuré et, d'autre part ladite solution catalytique au moins réduite et contenant du soufre élémentaire.
   Le procédé est caractérisé en ce que l'on recycle au moins une fraction F₁ de ladite solution catalytique au moins réduite et contenant du soufre élémentaire solide à l'étape d'absorption a) de manière à diminuer le nombre des grains de soufre de très faible taille.
   La fraction F₁ proprement dite ne peut pas correspondre à l'intégralité de la solution catalytique réduite provenant de la zone de mise en contact. Cette fraction F₁ contient du soufre dont la granulométrie peut être choisie.
   Selon un mode de mise en oeuvre on détermine par exemple la granulométrie des grains de soufre en suspension dans la solution catalytique au moins réduite à l'issue de l'étape a) et on ajuste la quantité de la fraction F₁ recyclée de ladite solution de façon à conserver une distribution granulométrique des particules dans un intervalle donné.
   On peut aussi ajuster la quantité recyclée de la solution catalytique réduite contenant le soufre en suspension en fonction de la quantité de soufre dans la charge. Généralement, plus la quantité de soufre dans la charge est élevée, plus le taux de recyclage est faible. Avantageusement, cette quantité recyclée contenant le soufre de granulométrie choisie peut représenter entre 1 et 95 % poids de la solution réduite, par exemple entre 20 et 90 %, de préférence entre 30 et 85 % poids et de manière encore plus préférée entre 50 et 80 %.
   Selon une caractéristique du procédé, on sépare de la fraction F₂ de la solution catalytique non recyclée le soufre élémentaire solide (étape (c)).
   Selon une autre caractéristique du procédé :
c) on peut régénérer au moins en partie ladite solution catalytique réduite appauvrie en soufre et de préférence débarrassée sensiblement de tout le soufre,
d) on recycle au moins une partie de la solution catalytique régénérée vers une étape de mise en contact de la solution régénérée avec une charge gazeuse constituée au moins d'hydrogène sulfuré.

Selon une autre caractéristique, une partie de la solution catalytique réduite, débarrassée sensiblement de tout le soufre peut être recyclée dans l'étape (a) de mise en contact.

Selon un mode de réalisation, on peut laver à l'eau le soufre produit lors de l'étape de séparation c) pour récupérer la solution catalytique qui l'imbibe et l'on traite la solution catalytique par osmose inverse pour contrôler la teneur en eau de ladite solution catalytique.

On peut laver à l'eau le soufre produit lors de l'étape de séparation c) pour récupérer la solution catalytique qui l'imbibe et traiter la solution catalytique par nanofiltration pour contrôler la teneur en eau et en ions de faible poids moléculaire de la solution catalytique.

Selon un mode de réalisation, on peut effectuer l'étape c) de séparation par filtration et on choisit l'intervalle de distribution granulométrique des grains de soufre en fonction des moyens de filtration.

On détend par exemple au moins une partie de la solution catalytique réduite et débarrassée de la majorité du soufre élémentaire et issue de l'étape c).

Selon un mode de mise en oeuvre on fractionne ladite solution catalytique réduite et appauvrie en soufre élémentaire issue de l'étape c), en une fraction F₄ et une fraction F₃ et on recycle la fraction F₄ non détendue vers l'étape d'absorption a).

On effectue par exemple une mesure de potentiel de ladite solution catalytique partiellement réduite avant l'étape de fractionnement et on détermine les fractions F₃ et F₄, on contrôle la quantité desdites fractions afin de conserver le ratio des ions ferriques aux ions ferreux compris entre 0.1 et 100, et de préférence entre 0.5 et 20.

On opère par exemple l'étape de séparation c) à une pression comprise entre 0,1 et 20 MPa.

L'invention concerne aussi un dispositif permettant la désulfuration d'une charge gazeuse contenant au moins de l'hydrogène sulfuré, ledit dispositif comportant au moins une enceinte de mise en contact de ladite charge gazeuse avec une solution catalytique comprenant au moins un métal polyvalent chélaté par au moins un agent chélatant, dans des conditions appropriées pour effectuer l'oxydation de l'hydrogène sulfuré en soufre élémentaire et la réduction concomitante du métal polyvalent chélaté d'un degré d'oxydation supérieur à un degré d'oxydation inférieur, des moyens d'évacuation du gaz épuré de la majorité du soufre et des moyens d'évacuation d'un mélange comportant la solution catalytique F₀ au moins partiellement réduite et contenant des grains de soufre élémentaire.

Le dispositif est caractérisé en ce qu'il comporte au moins un dispositif de fractionnement de ladite solution F₀ en au moins deux fractions F₁ et F₂, des moyens de recyclage de ladite fraction F₁ vers l'entrée de l'enceinte de mise en contact, des moyens de contrôle de la granulométrie des grains de soufre et des moyens de contrôle et/ou de régulation de la quantité de la fraction F₁ recyclée.

Il peut comporter un dispositif de séparation du soufre élémentaire solide de ladite solution catalytique réduite, une zone de régénération de ladite solution catalytique réduite, ladite zone de régénération comportant des moyens d'introduction d'un gaz comportant de l'oxygène.

Il peut aussi comporter au moins un moyen de détente disposé après ledit dispositif de séparation et un ballon flash.
Le procédé et le dispositif selon l'invention sont appliqués à la désulfuration d'un gaz naturel.

Le procédé selon l'invention présente notamment les avantages suivants :
* il favorise la captation du soufre "natif" se formant au cours de l'étape d'absorption, sur les grains présents dans la solution recyclée par agrégation ou agglomération ce qui diminue le nombre de particules de faible taille,
* il favorise le fonctionnement de l'unité de filtration du soufre située en aval de l'absorbeur, les particules ayant une taille plus importante. Les "gâteaux" de soufre formés sur les filtres étant plus épais, la fréquence des opérations de décolmatage est diminuée ou la surface filtrante installée est diminuée,
* il améliore l'efficacité de la filtration. Le nombre de particules pouvant passer à travers la surface filtrante est considérablement réduit, notamment en début de filtration au moment de la formation d'une précouche sur la surface filtrante,
* il améliore donc l'efficacité de la régénération de la solution catalytique.

Le procédé selon l'invention, s'applique par exemple pour désulfurer un gaz naturel, des gaz de raffineries tels que des gaz riches en hydrogène circulant dans des unités d'hydrotraitement, des gaz de cokeries,.....

L'invention sera mieux comprise au vu des figures suivantes illustrant de manière simplifiée et non limitative plusieurs modes de réalisation du procédé et du dispositif associé, parmi lesquelles :
* la figure 1 schématise un exemple de réalisation du dispositif et de la méthode selon l'invention, et
* la figure 2 représente une variante de l'exemple décrit à la figure 1 comportant une étape supplémentaire de lavage à l'eau du soufre imbibé de la solution catalytique et de traitement de cette solution catalytique.

De manière à illustrer les étapes du procédé selon l'invention, la description donnée ci-après concerne un procédé de désulfuration de gaz contenant au moins de l'hydrogène sulfuré où l'on utilise une solution catalytique comprenant au moins un métal polyvalent chélaté par au moins un agent chélatant, par exemple une solution de fer chélaté, pour réaliser l'oxydation de l'hydrogène sulfuré en soufre élémentaire et la réduction concomitante du métal polyvalent chélaté d'un degré d'oxydation supérieur à un degré d'oxydation inférieur. On récupère d'une part un effluent gazeux appauvri en hydrogène sulfuré et d'autre part la solution catalytique au moins partiellement réduite et contenant du soufre élémentaire sous la forme d'un solide en suspension.

Le soufre se présente à l'issue de l'étape d'oxydo-réduction sous la forme de particules ou grains de très faible taille.

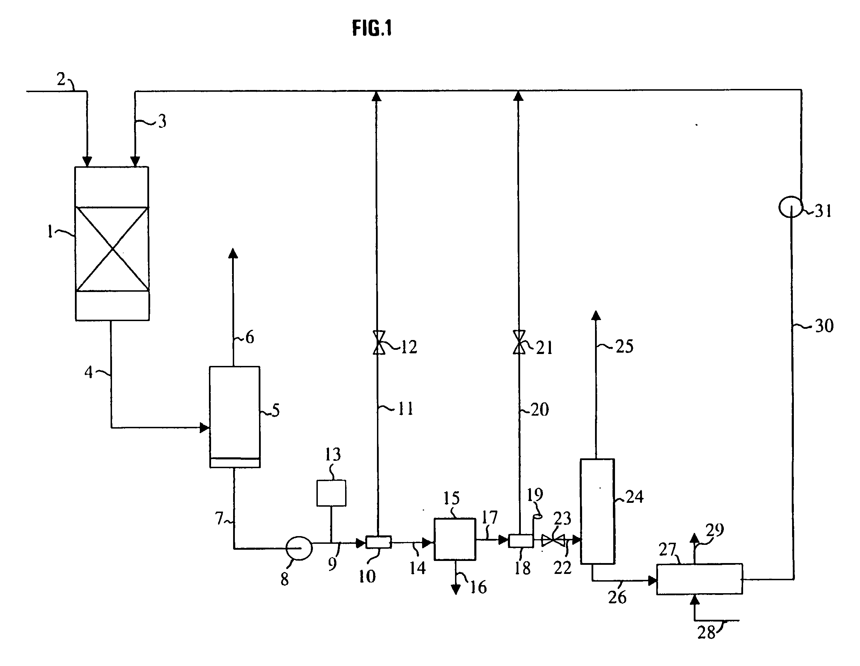

Le dispositif pour mettre en oeuvre le procédé selon l'invention qui est décrit à la figure 1 comporte : une enceinte de mise en contact 1 du gaz à traiter avec la solution catalytique, ou absorbeur dans laquelle s'effectue la réaction d'oxydo-réduction (1). L'absorbeur est pourvu d'un conduit d'introduction 2 du gaz à traiter, d'un conduit 3 d'introduction de la solution catalytique, les deux flux circulant dans l'absorbeur 1 par exemple à co-courant et un conduit d'évacuation 4 d'un mélange formé par la solution catalytique au moins partiellement réduite et contenant des grains de soufre en suspension et un gaz épuré en majorité du soufre. L'absorbeur se trouve sensiblement à la pression du gaz à traiter, cette dernière étant généralement comprise entre 0,1 et 20 MPa.

Le conduit 4 est relié à un moyen tel qu'un ballon de séparation 5 gaz-liquide. Ce ballon comporte en tête un conduit 6 d'évacuation du gaz épuré du soufre et en fond un conduit 7 d'évacuation de la solution catalytique au moins partiellement réduite et comportant des grains de soufre en suspension. Ce ballon est à une pression sensiblement égale à celle de l'absorbeur. La solution est envoyée à l'aide d'une pompe 8 et d'un conduit 9 vers un dispositif 10 tel qu'une jonction permettant de la scinder en au moins deux fractions F₁ et F₂.

La fraction F₁ au moins partiellement réduite et contenant du soufre élémentaire est envoyée par un conduit 11 vers l'absorbeur et utilisée pour diminuer, le nombre de particules de très faible taille. Le conduit 11 est équipé d'un ensemble de moyens 12 de contrôle et régulation du débit de la fraction F₁, tel qu'une vanne et/ou un débitmètre ou tout autre dispositif approprié. Des moyens 13 permettant de connaître la distribution granulométrique du soufre en suspension dans la solution catalytique au moins partiellement réduite sont par exemple disposés en amont de la jonction 10 . Les moyens 13 peuvent comporter un ou plusieurs granulomètres utilisant des ultrasons ou une technique laser.

La fraction F₁ peut être mélangée à la fraction F₄ de la solution catalytique épurée en soufre et à la fraction F₃ de la solution catalytique filtrée et régénérée mentionnée ci-après.

La fraction F₂ est envoyée vers les autres étapes du procédé décrit à la figure 1. Cette fraction F₂ est par exemple envoyée par un conduit 14 à un dispositif de séparation 15 du soufre élémentaire, par exemple un filtre adapté à réaliser une séparation à une pression voisine de celle régnant dans l'absorbeur.

Le soufre élémentaire est évacué par un conduit 16.

La solution catalytique au moins réduite et épurée en majorité au moins du soufre est envoyé par un conduit 17 vers un dispositif 18 dans lequel elle est par exemple scindée en deux fractions F₃ et F₄. Le dispositif 18 peut être équipé d'un moyen 19 de mesure du potentiel de la solution catalytique au moins partiellement réduite et épurée en majorité de soufre de manière à contrôler et réguler les proportions des fractions F₃ et F₄, par exemple en agissant sur le dispositif 21.

Le moyen de mesure du potentiel permet notamment de contrôler la valeur du ratio des ions ferriques aux ions ferreux et de conserver ce ratio de 0,1 à 100 et de préférence entre 0,5 et 20.

La fraction F₄ est recyclée par un conduit 20 équipé d'un dispositif 21 de contrôle et régulation de débit, tel qu'une vanne de régulation et un débitmètre en entrée d'absorbeur.

La fraction F₃ est envoyée par un conduit 22 à un moyen de détente 23 tel qu'une vanne. La détente produit un dégazage des gaz dissous dans la solution à haute pression. Le mélange de la solution catalytique au moins partiellement réduite et au moins détendue est introduit dans un ballon de flash 24. En tête du ballon de flash on récupère par un conduit 25 les gaz produits lors de la détente. Selon le type de gaz traité, les gaz peuvent être des hydrocarbures légers, du CO₂, de l'hydrogène, ou encore des composés organique soufrés. En fond de ballon on récupère par un conduit 26 la solution catalytique partiellement réduite et dégazée.

Cette dernière est envoyée par ce conduit 26 à une zone de régénération 27.

La zone de régénération est pourvue par exemple d'un conduit 28 d'introduction d'un agent oxydant tel que de l'air, d'un conduit 29 d'évacuation de l'air en excès qui n'a pas réagi et d'un conduit 30 permettant d'évacuer la solution catalytique régénérée. Cette dernière est reprise par exemple par une pompe 31 et recyclée par le conduit 3 vers l'enceinte de mise en contact 1.

Avantageusement, la séparation du soufre réalisée à haute pression selon le procédé de l'invention, permet d'éviter les problèmes de mousse formée lors de la récupération du soufre selon les schémas de l'art antérieur à basse pression et les problèmes de colmatage des dispositifs utilisés pour la mise en oeuvre du procédé.

L'étape de séparation est par exemple réalisée en utilisant un filtre haute pression tel que celui décrit dans le brevet US 5,435,911.

Le dispositif adapté à la séparation du soufre comporte par exemple des cartouches de filtration sur lesquelles les particules de soufre élémentaire se déposent. Il peut comporter par exemple plusieurs registres de filtration qui vont fonctionner en alternance. Le soufre déposé est ensuite récupéré par décolmatage des cartouches à l'aide d'un contre-courant liquide (débatissage humide) ou gazeux (débatissage à sec). Pendant l'opération de débatissage, le registre concerné ne joue pas son rôle de filtre et la solution continue d'être filtrée sur les autres registres. Le soufre est récupéré sous une forme d'un gâteau ou sous la forme d'une solution concentrée.

Le dispositif de filtration est choisi pour fonctionner à une valeur de pression comprise entre 0,1 et 20 MPa.

L'idée de l'invention consiste notamment à diminuer le nombre de particules de très faible taille par exemple en sortie d'absorbeur. Pour cela, on favorise la probabilité de rencontre entre les grains de soufre en recyclant la fraction F₁ prédéfinie à l'étape d'absorption (1).
Par exemple, on opère selon les étapes suivantes :
- on détermine ou on mesure la taille des grains de soufre en sortie de l'absorbeur,
- on fait varier le débit de la fraction F₁ recyclée afin de conserver une distribution granulométrique choisie, par exemple, en fonction de la quantité de H₂S présente dans la charge, du filtre utilisé et/ou de la manière d'opérer l'étape de régénération

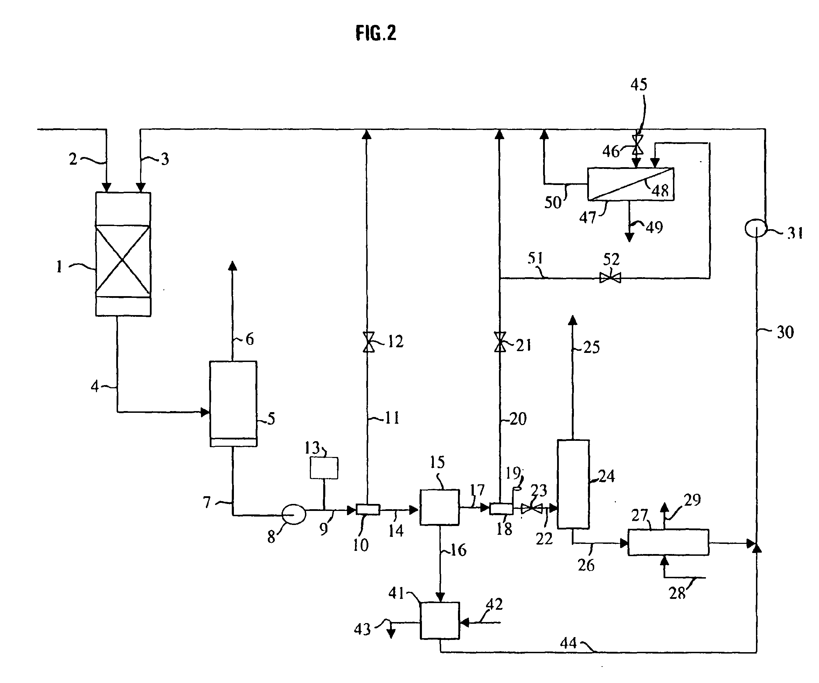

La figure 2 schématise une variante de mise en oeuvre du procédé décrit à la figure 1, dans laquelle le soufre produit après séparation est lavé à l'eau, puis la solution catalytique diluée est traitée par osmose inverse ou nanofiltration.

Après l'étape de séparation, le soufre produit est encore imbibé d'une quantité importante de solution catalytique partiellement réduite (de l'ordre de 20 à 50 %).

Dans le cas où le gaz à traiter est concentré en hydrogène sulfuré, la quantité de soufre produit peut être grande et donc les pertes en solution catalytique importantes. De plus, la solution catalytique contient des ions de faible poids moléculaire, provenant de réactions secondaires.

Afin de limiter les pertes de solution catalytique avec le soufre produit, ce dernier est envoyé, par une ligne à une étape de lavage constituée par exemple d'un équipement 41 de lavage à l'eau du soufre et de séparation du soufre lavé et de la solution catalytique diluée obtenue après lavage, d'une arrivée d'eau 42, d'un conduit d'évacuation 43 du soufre débarrassé au moins en partie de la solution catalytique qui l'imbibait et d'un conduit d'évacuation 44 de la solution catalytique diluée. Ladite solution catalytique diluée est envoyée par le conduit 44 vers le conduit 30. Cette solution diluée est envoyée avec la solution régénérée vers la pompe haute pression 31 qui les recomprime à une pression sensiblement identique à celle de l'absorbeur. Au moins une partie de cette solution catalytique recomprimée est envoyée par exemple à un dispositif de traitement 47 par un conduit 45 équipé d'une vanne 46 permettant de contrôler la fraction de la solution à traiter. Le traitement est réalisé par osmose inverse ou nanofiltration. Le dispositif de traitement 47 comporte par exemple une membrane 48 choisie pour ne laisser passer que des molécules d'eau (osmose inverse) ou des molécules d'eau et des ions de faible poids moléculaire provenant des réactions secondaires (nanofiltration). En revanche, la membrane 48 ne laisse pas passer le catalyseur (métal polyvalent chélaté par au moins un agent chélatant). Une partie de l'eau et éventuellement une partie des ions provenant des réactions secondaires sont évacués par un conduit 49 et la solution catalytique reconcentrée et éventuellement débarrassée en partie desdits ions est renvoyée par un conduit 50 à l'étape d'absorption.

Un by-pass partiel éventuel 51 équipé d'une vanne 52 permet d'envoyer une fraction de la solution catalytique filtrée et au moins partiellement réduite vers la zone de traitement par osmose inverse ou nanofiltration.

La force motrice d'une séparation par osmose inverse ou nanofiltration étant la pression, une pompe est généralement placée avant la membrane pour comprimer la solution à traiter. Avantageusement, selon le procédé de l'invention, la solution catalytique étant sous pression, il est inutile de rajouter une pompe, ce qui conduit à un gain en investissement et en énergie.

Un autre avantage de ce dispositif est que la présence d'une étape d'osmose inverse ou de nanofiltration permet d'éliminer l'eau en excès susceptible de s'accumuler dans l'unité et ainsi de contrôler la teneur en catalyseur de la solution catalytique. Les apparitions d'eau, autres que celles provenant du lavage du soufre, comme la formation d'eau par réaction chimique dans l'absorbeur ou l'eau de condensation, peuvent ainsi être évacuées par osmose inverse ou nanofiltration.

Le dispositif de lavage du soufre et de séparation par osmose inverse ou nanofiltration peut également s'appliquer dans d'autres procédés ou en utilisant d'autres équipements.

Sans sortir du cadre de l'invention le procédé selon l'invention peut aussi s'appliquer dans d'autres procédés ou en utilisant d'autres équipements.

### Exemple 1 : procédé selon un schéma sans recyclage

Un gaz contenant du méthane, 1 % volume de CO₂ et 16 ppm volume d'H₂S est introduit dans l'absorbeur 1 par le conduit 2 avec un débit de l'ordre de 1000 Nm³/h.

Il est mis en contact avec une solution catalytique aqueuse contenant du fer à une concentration de 0,25 mole/l et du NTA à la concentration de 0,5 mole/l, le débit de la solution étant de 800l/h.

La pression à l'intérieur de l'enceinte ou absorbeur est de 8 MPa, la température du gaz et de la solution catalytique est égale à 20 °C.

On récupère un gaz épuré contenant moins de 1 ppm de H₂S, et une solution catalytique partiellement réduite et contenant du soufre élémentaire à une concentration d'environ 28m g/l.

La solution catalytique est débarrassée du soufre en passant sur un filtre ayant une surface filtrante égale à 0,06 m². Le filtre est décolmaté par passage à contre-courant de la solution catalytique filtrée, lorsque la perte de charge au niveau du filtre atteint 0,2 MPa, soit en moyenne toutes les 4 heures. La solution catalytique filtrée est ensuite séparée en une fraction F₄ avec un débit égal à 720 l/h, directement recyclée vers l'absorbeur 1 et en une fraction F₃ avec un débit égal à 80I/h envoyée après détente vers le ballon de flash 24 puis à l'étape de régénération à l'air 27. La fraction régénérée est ensuite recyclée vers l'absorbeur via la pompe 31. L'air est envoyé sous un débit égal à 1.1 Nm³/h à l'étape de régénération.

La quantité de soufre élémentaire produit est égale à 22.8 gS/h.

Dans ces conditions, on a en sortie d'absorbeur un rapport Fe³⁺/Fe²⁺ sensiblement égal à 12. Le soufre en suspension dans cette solution F₀ se présente sous la forme de grains dont la taille moyenne est de 10 µm. Les grains sont constitués d'amas de cristallites d'une taille de l'ordre de 0.1 µm.

### Exemple 2 : mise en oeuvre du procédé selon l'invention avec recyclage d'une fraction de la solution catalytique pour diminuer le nombre de grains de soufre de très faible taille.

Un gaz contenant du méthane, 1 % volume de CO₂ et 16 ppm volume d'H₂S est introduit dans l'absorbeur par le conduit 2 avec un débit de l'ordre de 1000 Nm³/h.

Il est mis en contact avec une solution catalytique aqueuse, contenant 86 mg/l de soufre solide en suspension, du fer à une concentration de 0,25 mole/l et du NTA à la concentration de 0,5 mole/l, le débit de la solution étant de 800 I/h.

La pression à l'intérieur de l'absorbeur est de 8MPa, la température du gaz et de la solution catalytique est égale à 20 °C.

On récupère un gaz épuré contenant moins de 1 ppm de H₂S, et une solution catalytique F₀ partiellement réduite et contenant du soufre élémentaire à une concentration de 114 mg/l.

Cette solution catalytique est séparée en une fraction F₁ directement recyclée à l'absorbeur 1 sous un débit de 600 l/h, et une fraction F₂ envoyée vers un filtre sous un débit de 200 I/h.

Le filtre a une surface filtrante de 0.03 m². Le filtre est décolmaté, par passage à contre-courant de solution catalytique filtrée, lorsque la perte de charge au niveau du filtre atteint 0.2 MPa, soit en moyenne toutes les 4 h. La solution catalytique filtrée est alors séparée en une fraction majoritaire F₄, d'un débit égal à 120 l/h, directement recyclée vers l'absorbeur 1 et une fraction minoritaire F₃, d'un débit égal à 80 I/h, envoyée après détente vers le ballon de flash 24 puis l'étape de régénération à l'air 27, avant recyclage vers l'absorbeur 1, via la pompe 31. Le débit d'air envoyé d'un l'étape de régénération de la solution catalytique est égal à 1.1 Nm3/h.

La quantité totale de soufre produit est égale à 22.8 g S/h.

Dans ces conditions on a en sortie d'absorbeur dans la solution catalytique F₀ un rapport Fe^{3+/}Fe²⁺ sensiblement égal à 12. Le soufre en suspension dans cette solution se trouve sous la forme de grains dont la taille moyenne est de 16 µm, constitués d'amas de cristallites d'une taille de l'ordre de 0.1 µm.

On voit donc sur cet exemple que le recyclage direct avant filtration d'une fraction de la solution catalytique chargée en soufre permet, pour un même débit de gaz traité, un même débit total de solution alimentant l'absorbeur, une même fréquence de décolmatage du filtre et une même quantité de soufre produite, d'augmenter significativement la taille des grains de soufre et surtout de réduire d'un facteur 2 la surface filtrante installée et donc le coût du filtre d'une manière substantielle.

La mise en oeuvre du procédé selon l'invention n'est pas limité aux exemples de réalisation donnés aux figures 1 et 2.

Sans sortir du cadre de l'invention, le procédé selon l'invention s'applique pour des gaz à haute pression ou encore basse pression, le schéma de procédé et les moyens de filtration étant adaptés en conséquence.

L'enceinte 1 de mise en contact ou absorbeur comporte par exemple au moins un réacteur/ contacteur choisi parmi la liste suivante : réacteur à garnissage structuré ou en vrac, mélangeur statique, impacteur à jets turbulents, hydro-éjecteurs, atomiseur, contact à fils, ou colonne à bulles.

Dans le cas où le contact entre le gaz et le liquide se fait à co-courant, le gaz épuré et la solution partiellement réduite sont séparés dans un ballon séparateur, avant ou après l'étape de séparation du soufre élémentaire.

A l'intérieur de l'enceinte de mise en contact, le gaz à traiter peut circuler à contre-courant ou à co-courant de la solution catalytique.

Le recyclage de la solution réduite contenant le soufre de granulométrie choisie peut être réalisé au même endroit dans la zone de mise en contact ou dans des endroits différents.

La solution catalytique utilisée peut être :
⇒ une solution aqueuse, par exemple une solution de métal polyvalent chélaté, telle qu'une solution aqueuse de fer chélaté produite par exemple à partir de fer ferreux ou ferrique tel que les sulfates, les nitrates, le thiosulfate, le chlorure, l'acétate, l'oxalate, les phosphates, les sels solubles de fer et d'ammonium ou de potassium, tels que le sulfate de fer ferreux et d'ammonium, l'oxalate ferrique d'ammonium, l'oxalate ferrique de potassium.
   On utilise par exemple des agents chélatants seuls ou en mélange, tels que des composés organiques connus pour leurs propriétés complexantes, par exemple l'acétylacétone, l'acide citrique, l'acide salicyclique, l'acide sulfosalicyclique, le tiron (acide catéchodisulfonique), le dimercapto-2-3 propanol et les aminoacides tels que l'EDTA (acide éthylènediamine tétraacétique), l'HEDTA (acide hydroxy2éthylènediamine triaacétique), le NTA (acide nitrilotriacétique), le DCTA (acide diamino-1-2 cyclohexane tétraacétique), le DPTA (acide diéthylènetriamine pentaacétique), l'IDA (acide imonodiacétique).
⇒ une solution organique.
   On utilise par exemple une solution organique constituée (i) d'un solvant sélectionné parmi les produits suivants : N-methyl pyrrolidine, N-formylmorpholine, morpholine, dimethyl sulfoxide, sulfolane, dimethyl formamide, propylene carbonate, 1,4-dioxane, 4-hydroxy-4-methyl-2-pentanone, propylene glycol methyl ether, 2-butoxyethanol, 4-methyl-2-pentanone, 2,4 pentanedione, seuls ou en mélanges, et (ii) d'un métal polyvalent chélaté de formule ML₃ où L est de la forme R₁COCH₂COR₂ avec R₁ et R₂ sélectionnés parmi les groupes CH₃, C₂H₅, C₆H₅, CF₃, C₄H₃S, et M est un métal polyvalent qui existe dans au moins deux états d'oxydation.

Lorsque l'on utilise une solution organique, les grains de soufre n'apparaissent dans la solution qu'après saturation de ladite solution par le soufre dissous.

Sans sortir du cadre de l'invention, l'étape de régénération est par exemple réalisée en mettant en contact la solution catalytique en circulation avec un gaz contenant de l'oxygène, dans des conditions adaptées pour obtenir une dispersion du gaz en très fines bulles dans la solution catalytique, en augmentant la vitesse de circulation de ladite solution. Pour cela on peut utiliser un hydro-éjecteur.

L'étape de régénération de la solution catalytique avec un agent oxydant peut aussi être réalisée en utilisant un contacteur gaz-liquide choisi dans la liste mentionnée pour l'enceinte d'absorption.

## Revendications

1. - Procédé amélioré de désulfuration d'une charge gazeuse contenant de l'hydrogène sulfuré comportant au moins les étapes suivantes :
a) on met en contact la charge gazeuse avec une solution catalytique comportant au moins un métal polyvalent chélaté par au moins un agent chélatant, dans des conditions appropriées pour effectuer l'oxydation de l'hydrogène sulfuré en soufre élémentaire et la réduction concomitante du métal polyvalent d'un degré d'oxydation supérieur à un degré d'oxydation inférieur, dans une étape d'absorption,
b) on récupère d'une part un effluent gazeux sensiblement débarrassé en hydrogène sulfuré et, d'autre part ladite solution catalytique au moins réduite et contenant du soufre élémentaire,
**caractérisé en ce que** l'on recycle au moins une fraction F₁ de ladite solution catalytique au moins réduite et contenant du soufre élémentaire solide à l'étape d'absorption a) de manière à diminuer le nombre des grains de soufre de très faible taille.

2. - Procédé selon la revendication 1 **caractérisé en ce que** l'on détermine la granulométrie des grains de soufre en suspension dans la solution catalytique au moins réduite à l'issue de l'étape a) et on ajuste la quantité de la fraction F₁ recyclée de ladite solution de façon à conserver une distribution granulométrique des particules dans un intervalle donné.

3. - Procédé selon l'une des revendications 1 et 2 **caractérisé en ce que**, dans une étape (c), on sépare le soufre élémentaire solide de la fraction F₂ de la solution catalytique non recyclée.

4. - Procédé selon la revendication 3, dans lequel :
a) on régénère, au moins en partie, ladite solution catalytique réduite appauvrie en soufre, et
b) on recycle au moins une partie de la solution catalytique régénérée vers une étape de mise en contact de la solution régénérée avec une charge gazeuse constituée au moins d'hydrogène sulfuré.

5. - Procédé selon l'une des revendications 3 et 4, **caractérisé en ce que** l'on lave à l'eau le soufre produit lors de l'étape de séparation c) pour récupérer la solution catalytique qui l'imbibe et l'on traite la solution catalytique par osmose inverse pour contrôler la teneur en eau de ladite solution catalytique.

6. - Procédé selon la revendication 3 **caractérisé en ce que** l'on lave à l'eau le soufre produit lors de l'étape de séparation (c) pour récupérer la solution catalytique qui l'imbibe et l'on traite la solution catalytique par nanofiltration pour contrôler la teneur en eau et en ions de faible poids moléculaire de la solution catalytique.

7. - Procédé selon la revendication 3 **caractérisé en ce que** l'on effectue l'étape c) de séparation par filtration et on choisit l'intervalle de distribution granulométrique des grains de soufre en fonction des moyens de filtration.

8. - Procédé selon l'une des revendications 1 et 2 et 3 **caractérisé en ce que** l'on détend au moins une partie de la solution catalytique réduite et débarrassée de la majorité du soufre élémentaire et issue de l'étape c).

9. - Procédé selon la revendication 3 **caractérisé en ce que** l'on fractionne ladite solution catalytique réduite et appauvrie en soufre élémentaire issue de l'étape c), en une fraction F₄ et une fraction F₃ et on recycle la fraction F₄ non détendue vers l'étape d'absorption a).

10. - Procédé selon la revendication 9 **caractérisé en ce que** l'on effectue une mesure de potentiel de ladite solution catalytique partiellement réduite avant l'étape de fractionnement et on détermine les fractions F₃ et F₄, on contrôle la quantité desdites fractions afin de conserver le ratio des ions ferriques aux ions ferreux compris entre 0.1 et 100, et de préférence entre 0.5 et 20.

11. - Dispositif permettant la désulfuration d'une charge gazeuse contenant au moins de l'hydrogène sulfuré, ledit dispositif comportant au moins une enceinte de mise en contact (1) de ladite charge gazeuse avec une solution catalytique comprenant au moins un métal polyvalent chélaté par au moins un agent chélatant, dans des conditions appropriées pour effectuer l'oxydation de l'hydrogène sulfuré en soufre élémentaire et la réduction concomitante du métal polyvalent chélaté d'un degré d'oxydation supérieur à un degré d'oxydation inférieur, des moyens d'évacuation du gaz épuré de la majorité du soufre et des moyens d'évacuation d'un mélange comportant la solution catalytique F₀ au moins partiellement réduite et contenant des grains de soufre élémentaire,
**caractérisé en ce qu'**il comporte au moins un dispositif (10) de fractionnement de ladite solution F₀ en au moins deux fractions F₁ et F₂, des moyens de recyclage (11) de ladite fraction F₁ vers l'entrée de l'enceinte de mise en contact, des moyens de contrôle (13) de la granulométrie des grains de soufre et des moyens de contrôle et/ou de régulation (12) de la quantité de la fraction F₁ recyclée.

12. - Dispositif selon la revendication 11 **caractérisé en ce qu'**il comporte un dispositif de séparation (15) du soufre élémentaire solide de ladite solution catalytique réduite, une zone de régénération (27) de ladite solution catalytique réduite, ladite zone de régénération (27) comportant des moyens (28) d'introduction d'un gaz comportant de l'oxygène.

13. - Dispositif selon l'une des revendications 11 à 12 **caractérisé en ce qu'**il comporte au moins un moyen de détente (23) disposé après ledit dispositif de séparation (15) et un ballon flash (24).

14. - Application du procédé selon l'une des revendications 1 à 10 ou du dispositif selon l'une des revendications 11 à 13 à la désulfuration d'un gaz naturel.

## Claims

1. An improved process intended for desulfurization of a gaseous feed containing hydrogen sulfide, comprising at least the following stages :
a) contacting the gaseous feed with a catalytic solution containing at least one polyvalent metal chelated by at least one chelating agent, under suitable conditions for oxidation of the hydrogen sulfide to elementary sulfur and concomitant reduction of the polyvalent metal from a higher oxidation level to a lower oxidation level in an absorption stage,
b) recovering on the one hand a gaseous effluent substantially freed from hydrogen sulfide and, on the other hand, said catalytic solution at least reduced and containing elementary sulfur,
**characterized in that** at least a fraction F₁ of said catalytic solution at least reduced and containing solid elementary sulfur is recycled to absorption stage a) so as to reduce the number of sulfur grains of very small size.

2. A process as claimed in claim 1, **characterized in that** the grain size of the sulfur grains suspended in the catalytic solution at least reduced after stage a) is determined and the quantity of recycled fraction F₁ of said solution is adjusted so as to maintain a grain size distribution of the particles within a given range.

3. A process as claimed in any one of claims 1 or 2, **characterized in that**, in a stage c), the solid elementary sulfur is separated from the non-recycled fraction F₂ of the catalytic solution.

4. A process as claimed in claim 3, wherein :
a) said reduced catalytic solution depleted in sulfur is at least partly regenerated, and
b) at least part of the regenerated catalytic solution is recycled to a stage of contacting the regenerated solution with a gaseous feed consisting at least of hydrogen sulfide.

5. A process as claimed in any one of claims 3 and 4, **characterized in that** the sulfur produced during separation stage c) is washed with water in order to recover the catalytic solution imbibing it and the catalytic solution is processed by reverse osmosis in order to control the water content of said catalytic solution.

6. A process as claimed in claim 3, **characterized in that** the sulfur produced during separation stage c) is washed with water in order to recover the catalytic solution imbibing it and the catalytic solution is processed by nanofiltration in order to control the proportion of water and of ions of low molecular weight in the catalytic solution.

7. A process as claimed in claim 3, **characterized in that** separation stage c) is carried out by filtration and the grain size distribution range of the sulfur grains is selected according to the filtering means.

8. A process as claimed in any one of claims 1, 2 and 3, **characterized in that** at least part of the reduced catalytic solution freed from most of the elementary sulfur, obtained in stage c), is expanded.

9. A process as claimed in claim 3, **characterized in that** said reduced catalytic solution depleted in elementary sulfur from stage c) is fractionated into a fraction F₄ and a fraction F₃, and non-expanded fraction F₄ is recycled to absorption stage a).

10. A process as claimed in claim 9, **characterized in that** the potential of said partly reduced catalytic solution is measured prior to the fractionation stage and fractions F₃ and F₄ are determined, the quantity of said fractions is controlled in order to maintain the ratio of the ferric ions to the ferrous ions between 0.1 and 100, preferably between 0.5 and 20.

11. A device intended for desulfurization of a gaseous feed containing at least hydrogen sulfide, said device comprising at least one enclosure (1) for contacting said gaseous feed with a catalytic solution containing at least one polyvalent metal chelated by at least one chelating agent, under suitable conditions for oxidation of the hydrogen sulfide to elementary sulfur and concomitant reduction of the chelated polyvalent metal from a higher oxidation level to a lower oxidation level, means intended for discharge of the gas freed from most of the sulfur and means intended for discharge of a mixture comprising catalytic solution F₀ at least partly reduced and containing elementary sulfur grains,
**characterized in that** it comprises at least a device (10) for fractionating said solution F₀ into at least two fractions F₁ and F₂, means (11) for recycling said fraction F₁ to the inlet of the contacting enclosure, means (13) for controlling the grain size of the sulfur grains and means (12) for controlling and/or regulating the quantity of fraction F₁ recycled.

12. A device as claimed in claim 11, **characterized in that** it comprises a device (15) for separating the solid elementary sulfur from said reduced catalytic solution, a zone (27) intended for regeneration of said reduced catalytic solution, said regeneration zone (27) comprising means (28) intended for delivery of a gas containing oxygen.

13. A device as claimed in any one of claims 11 to 12, **characterized in that** it comprises at least one expansion means (23) arranged after said separation device (15) and a flash drum (24).

14. Application of the process as claimed in any one of claims 1 to 10 or of the device as claimed in any one of claims 11 to 13 for desulfurization of a natural gas.

## Patentansprüche

1. Verbessertes Verfahren zum Entschwefeln eines gasförmigen Einsatzguts, das Schwefelwasserstoff enthält, wobei das Verfahren mindestens die folgenden Schritte umfasst:
a) einen Absorptionsschritt, in dem das gasförmige Einsatzgut mit einer katalytischen Lösung, die mindestens ein Chelat aus einem mehrwertigen Metall und mindestens einem Chelatbildner enthält, unter Bedingungen, die geeignet sind, die Oxidation des Schwefelwasserstoffs in elementaren Schwefel und die damit einhergehende Reduktion des mehrwertigen Metalls von einem höheren Oxidationsgrad zu einem niedrigeren Oxidationsgrad durchzuführen, zusammengebracht gebracht wird,
b) einen Schritt, in dem einerseits ein gasförmiger, im Wesentlichen schwefelwasserstofffreier Abstrom und andererseits die mindestens reduzierte katalytische Lösung, die elementaren Schwefel enthält, gewonnen werden,
**dadurch gekennzeichnet, dass** mindestens eine Fraktion F₁ der mindestens reduzierten katalytischen Lösung, die festen elementaren Schwefel enthält, zum Absorptionsschritt a) rückgeführt wird, um die Anzahl der Schwefelkörner sehr geringer Größe zu verringern.

2. Verfahren nach. Anspruch 1, **dadurch gekennzeichnet, dass** die Granulometrie der Schwefelkörner in Suspension in der mindestens reduzierten katalytischen Lösung nach Abschluss des Schritts a) bestimmt wird und die Menge der Fraktion F₁, die von der Lösung rückgeführt wird, so eingestellt wird, dass eine Korngrößenverteilung der Partikel in einem bestimmten Intervall erhalten bleibt.

3. Verfahren nach einem der Ansprüche 1 und 2, **dadurch gekennzeichnet, dass** in einem Schritt (c) der feste elementare Schwefel der Fraktion F₂ von der nicht rückgeführten katalytischen Lösung getrennt wird.

4. Verfahren nach Anspruch 3, in dem:
a) die an Schwefel verarmte, reduzierte katalytische Lösung zumindest teilweise regeneriert wird, und
b) zumindest ein Teil der regenerierten katalytischen Lösung zu einem Schritt des Zusammenbringens der regenerierten Lösung mit einem gasförmigen Einsatzgut, das mindestens aus Schwefelwasserstoff gebildet ist, rückgeführt wird.

5. Verfahren nach einem der Ansprüche 3 und 4, **dadurch gekennzeichnet, dass** der während des Trennschritts c) erzeugte Schwefel mit Wasser gewaschen wird, um die katalytische Lösung, die er aufgenommen hat, rückzugewinnen, und die katalytische Lösung mittels Umkehrosmose behandelt wird, um den Wassergehalt der katalytischen Lösung einzustellen.

6. Verfahren nach Anspruch 3, **dadurch gekennzeichnet, dass** der während des Trennschritts (c) erzeugte Schwefel mit Wasser gewaschen wird, um die katalytische Lösung, die er aufgenommen hat, rückzugewinnen, und die katalytische Lösung mittels Nanofiltration behandelt wird, um den Gehalt der katalytischen Lösung an Wasser und an Ionen mit niedrigem Molekulargewicht einzustellen.

7. Verfahren nach Anspruch 3, **dadurch gekennzeichnet, dass** der Trennschritt c) als Filtration ausgeführt wird und das Intervall der Korngrößenverteilung der Schwefelkörner in Abhängigkeit von den Filtermitteln gewählt wird.

8. Verfahren nach einem der Ansprüche 1 und 2 und 3,
**dadurch gekennzeichnet, dass** zumindest ein Teil der aus dem Schritt c) kommenden, reduzierten und vom überwiegenden Teil des elementaren Schwefels befreiten katalytischen Lösung entspannt wird.

9. Verfahren nach Anspruch 3, **dadurch gekennzeichnet, dass** die aus dem Schritt c) kommende reduzierte und an elementarem Schwefel verarmte katalytische Lösung fraktioniert wird, in eine Fraktion F₄ und eine Fraktion F₃, und die nicht entspannte Fraktion F₄ zum Absorptionsschritt a) rückgeführt wird.

10. Verfahren nach Anspruch 9, **dadurch gekennzeichnet, dass** eine Messung des Potentials der teilweise reduzierten katalytischen Lösung vor dem Fraktionierungsschritt durchgeführt wird und die Fraktionen F₃ und F₄ bestimmt werden, wobei die Menge der Fraktionen eingestellt wird, um das Verhältnis von Eisen(III)-ionen zu Eisen(II)-ionen im Bereich zwischen 0,1 und 100 und vorzugsweise zwischen 0,5 und 20 zu halten.

11. Vorrichtung zum Entschwefeln eines gasförmigen Einsatzguts, das mindestens Schwefelwasserstoff enthält, wobei die Vorrichtung umfasst: mindestens einen Behälter (1) zum Zusammenbringen des gasförmigen Einsatzguts mit einer katalytischen Lösung, die mindestens ein Chelat aus einem mehrwertigen Metall und mindestens einem Chelatbildner enthält, unter Bedingungen, die geeignet sind, die Oxidation von Schwefelwasserstoff in elementaren Schwefel und die damit einhergehende Reduktion des Chelats des mehrwertigen Metalls von einem höheren Oxidationsgrad zu einem niedrigeren Oxidationsgrad durchzuführen, Mittel zum Ableiten des vom überwiegenden Teil des Schwefels gereinigten Gases und Mittel zum Ableiten eines Gemischs, das die zumindest teilweise reduzierte katalytische Lösung F₀ umfasst und Körner elementaren Schwefels enthält,
**dadurch gekennzeichnet, dass** sie mindestens eine Vorrichtung (10) zum Fraktionieren der Lösung F₀ in mindestens zwei Fraktionen F₁ und F₂, Mittel (11) zum Rückführen der Fraktion F₁ zum Einlass des Behälters zum Zusammenbringen, Mittel (13) zum Einstellen der Granulometrie der Schwefelkörner und Mittel (12) zum Einstellen und/oder Regulieren der Menge der rückgeführten Fraktion F₁ umfasst.

12. Vorrichtung nach Anspruch 11, **dadurch gekennzeichnet, dass** sie eine Einrichtung (15) zum Trennen des festen elementaren Schwefels von der reduzierten katalytischen Lösung und eine Zone (27) zum Regenerieren der reduzierten katalytischen Lösung umfasst, wobei die Regenerationszone (27) Mittel (28) zum Einleiten eines sauerstoffhaltigen Gases umfasst.

13. Vorrichtung nach einem der Ansprüche 11 bis 12, **dadurch gekennzeichnet, dass** sie mindestens ein Entspannungsmittel (23), das nach der Trennvorrichtung (15) angeordnet ist, und einen Entspannungsbehälter (24) umfasst.

14. Anwendung des Verfahrens nach einem der Ansprüche 1 bis 10 oder der Vorrichtung nach einem der Ansprüche 11 bis 13 bei der Entschwefelung von Erdgas.
